# EUROPÄISCHE PATENTANMELDUNG

(11) **EP 3 103 597 A1**
(43) Veröffentlichungstag der Anmeldung: **14.12.2016**
(21) Anmeldenummer: 16001175.5
(22) Anmeldetag: 23.05.2016
(51) Int. Cl.: B25J 9/16, G05B 19/4061

(54) **VERFAHREN UND SYSTEM ZUR KOLLISIONSÜBERWACHUNG EINES ROBOTERS**

(30) Priorität: 08.06.2015 DE 102015007395
(71) Anmelder: KUKA Roboter GmbH, 86165 Augsburg (DE)
(72) Erfinder: Frensch, Ewald, 86438 Kissing (DE); Geiler, Torsten, 86179 Augsburg (DE)
(74) Vertreter: Schlotter, Alexander Carolus Paul

(57) **Zusammenfassung**

Ein erfindungsgemäßes Verfahren zum Betreiben und/oder Überwachen einer Maschine, insbesondere eines mehrachsigen Roboters, umfasst die Schritte:
- Ermitteln (S20), ob eine Außengrenze (a) eines ersten Raumbereichs (A) und eine Außengrenze (b) eines zweiten Raumbereichs (B) einander schneiden; und
- Feststellen (S30) einer Penetration des ersten Raumbereichs durch den zweiten Raumbereich, falls die beiden Außengrenzen einander schneiden,
wobei einer (B) der beiden Raumbereiche maschinenfest ist.

## Beschreibung

Die vorliegende Erfindung betrifft ein Verfahren und ein System zum Betreiben und/oder Überwachen wenigstens einer Maschine, insbesondere wenigstens eines mehrachsigen Roboters, sowie ein Computerprogrammprodukt zur Durchführung eines Verfahrens.

Insbesondere zum Planen kollisionsfreier Bahnen und zum Überwachen auf Kollisionen von Robotern ist es bekannt, Roboter bzw. deren Glieder jeweils durch einzelne Primitive zu approximieren.

Die US 5 347 459 A schlägt demgegenüber vor, Glieder eines Roboters jeweils durch mehrere Sphären zu approximieren, Raumvoxel mit Distanzen zu Hindernissen zu belegen und eine Kollision zu erfassen, wenn ein Radius einer Sphäre in einem Raumvoxel die Distanz übersteigt, mit der dieses belegt ist.

Aufgabe der vorliegenden Erfindung ist es, den Betrieb einer Maschine, insbesondere eines Roboters, zu verbessern.

Diese Aufgabe wird insbesondere durch ein Verfahren mit den Merkmalen des Anspruchs 1 gelöst. Ansprüche 13, 14 stellen ein System und ein Computerprogrammprodukt zur Durchführung eines hier beschriebenen Verfahrens unter Schutz, die Unteransprüche betreffen vorteilhafte Weiterbildungen.

Nach einem Aspekt der vorliegenden Erfindung wird beim Betreiben und/oder Überwachen einer beweglichen Maschine, insbesondere eines mehrachsigen Roboters, insbesondere durch ein hierzu, insbesondere hard- und/oder softwaretechnisch, eingerichtetes Mittel eines Systems, ermittelt, ob eine Außengrenze eines ersten Raumbereichs und eine Außengrenze eines zweiten Raumbereichs einander schneiden, wobei einer der beiden Raumbereiche maschinenfest ist, und, insbesondere durch ein hierzu, insbesondere hard- und/oder softwaretechnisch, eingerichtetes Mittel des Systems, eine Penetration des ersten Raumbereichs durch den zweiten Raumbereich festgestellt, falls (ermittelt wird, dass) die beiden Außengrenzen einander schneiden.

Das Betreiben kann in einer Ausführung insbesondere eine Bewegungs-, insbesondere Bahnplanung bzw. -vorgabe der Maschine, insbesondere des Roboters, insbesondere vor und/oder während des Betriebs bzw. off- und/oder online, umfassen, insbesondere sein. Ein Überwachen kann in einer Ausführung insbesondere eine, insbesondere sichere, Kollisionsüberwachung umfassen, insbesondere sein, insbesondere vor dem Betrieb, insbesondere für eine bzw. während einer Bewegungs-, insbesondere Bahnplanung, und/oder während des Betriebs bzw. off-und/oder online.

Der erste und zweite Raumbereich sind in einer Ausführung zwei- oder dreidimensionale (Teil)Bereiche eines kartesischen Raums. Die Außengrenze des ersten Raumbereichs und/oder die Außengrenze des zweiten Raumbereichs ist in einer Ausführung geschlossen.

Der maschinenfeste Raumbereich ist bzw. wird in einer Ausführung bezüglich der Maschine, insbesondere des Roboters, definiert bzw. vorgegeben bzw. beschrieben. Er kann sich in einer Ausführung mit der Maschine, insbesondere einem Glied des Roboters, mitbewegen bzw. relativ zu dieser ortsfest sein. In einer Ausführung ist bzw. wird der maschinenfeste Raumbereich bezüglich der Maschine, insbesondere des Roboters, konstant definiert bzw. vorgegeben, in einer anderen Ausführung veränderlich, insbesondere abhängig von einem Betriebszustand, insbesondere einer Stellung, der Maschine. In einer Ausführung umhüllt der maschinenfeste Raumbereich ein bewegliches Glied der Maschine, insbesondere des Roboters

Der andere der Raumbereiche ist bzw. wird in einer Ausführung bezüglich der Umgebung, insbesondere einer Basis des Roboters, definiert bzw. vorgegeben bzw. beschrieben. In einer Ausführung ist bzw. wird der andere, umgebungsfeste Raumbereich bezüglich der Umgebung konstant definiert bzw. vorgegeben, in einer anderen Ausführung veränderlich, insbesondere abhängig von einem Betriebszustand, insbesondere einer Stellung, der Maschine, einem Umgebungsbetriebsparameter wie beispielsweise einer Stellung einer Tür, eines Förderbandes oder dergleichen, und/oder zeitabhängig. Durch einen umgebungsfesten Raumbereich kann insbesondere ein für die Maschine gesperrter Schutzbereich definiert bzw. beschrieben werden bzw. sein.

In einer anderen Ausführung ist bzw. wird der andere der Raumbereiche bezüglich einer anderen Maschine, insbesondere eines anderen mehrachsigen Roboters, definiert bzw. vorgegeben bzw. beschrieben. Er kann sich in einer Ausführung mit der anderen Maschine, insbesondere einem Glied des anderen Roboters, mitbewegen bzw. relativ zu dieser ortsfest sein. In einer Ausführung ist bzw. wird der andere bzw. bezüglich einer anderen Maschine feste Raumbereich bezüglich der anderen Maschine, insbesondere des anderen Roboters, konstant definiert bzw. vorgegeben, in einer anderen Ausführung veränderlich, insbesondere abhängig von einem Betriebszustand, insbesondere einer Stellung, der anderen Maschine. Durch einen solchen anderen Raumbereich kann insbesondere eine Kollision kooperierender Maschinen, insbesondere Roboter erfasst bzw. vermieden werden. Entsprechend umhüllt in einer Ausführung der andere Raumbereich ein bewegliches Glied der anderen Maschine, insbesondere des anderen Roboters

Erfindungsgemäß wurde erkannt, dass (wenigstens) ein Schnitt der Außengrenzen zweier Raumbereiche eine notwendige Voraussetzung einer Penetration des einen Raumbereichs durch den anderen Raumbereich ist und somit genutzt werden kann, um eine solche positiv festzustellen. Dabei wird auch eine Berührung der beiden Außengrenzen in einem Punkt zur kompakteren Darstellung verallgemeinernd als Schnitt bezeichnet.

Durch die Überprüfung eines Schneidens der Außengrenzen kann in einer Ausführung vorteilhaft auf eine Abstandsberechnung und/oder eine, insbesondere vollständige, Überprüfung kompletter Raum(innen)bereiche verzichtet oder diese jedenfalls vereinfacht und somit insbesondere beschleunigt werden.

Erfindungsgemäß wurde weiter erkannt, dass eine hinreichende Voraussetzung dafür, dass keine Penetration des einen Raumbereichs durch den anderen Raumbereich vorliegt, ist, dass die beiden Außengrenzen einander nicht schneiden und zudem auch keiner der beiden Bereiche vollständig in dem anderen der beiden Bereiche liegt. Entsprechend wird in einer Ausführung, insbesondere durch ein hierzu, insbesondere hard- und/oder softwaretechnisch, eingerichtetes Mittel des Systems, festgestellt, dass keine Penetration des ersten Raumbereichs durch den zweiten Raumbereich vorliegt, falls die beiden Außengrenzen einander nicht schneiden und zusätzlich keiner der beiden Bereiche vollständig in dem anderen der beiden Bereiche liegt.

Hierzu können in einer Ausführung einer der beiden Bereich oder beide Bereiche, insbesondere durch ein hierzu, insbesondere hard- und/oder softwaretechnisch, eingerichtetes Mittel, (jeweils) derart definiert werden bzw. sein, dass er nicht vollständig in dem (jeweils) anderen der beiden Bereiche liegen kann.

In einer Weiterbildung kann der jeweilige Bereich, insbesondere durch das Mittel, nach bzw. durch seine(r) Größe derart definiert werden bzw. sein, dass er nicht vollständig in dem (jeweils) anderen der beiden Bereiche liegen kann, beispielsweise, indem eine maximale Abmessung des einen Bereichs größer als eine maximale Abmessung des anderen der beiden Bereiche ist.

Zusätzlich oder alternativ kann der jeweilige Bereich in einer Weiterbildung, insbesondere durch das Mittel, nach bzw. durch seine(r) Form derart definiert werden bzw. sein, dass er nicht vollständig in dem (jeweils) anderen der beiden Bereiche liegen kann.

Zusätzlich oder alternativ zu einer Wahl wenigstens eines der beiden Bereiche derart, dass er nicht vollständig in dem anderen der beiden Bereiche liegen kann, wird in einer Ausführung, insbesondere durch ein hierzu, insbesondere hard- und/oder softwaretechnisch, eingerichtetes Mittel, (jeweils) ermittelt, ob wenigstens, insbesondere genau, ein ausgewählter Punkt des einen Raumbereichs, insbesondere seiner Außengrenze, innerhalb des (jeweils) anderen Bereichs liegt, und festgestellt, dass dieser eine Raumbereich nicht vollständig in dem anderen Bereich liegt, falls der bzw. die ausgewählten Punkt(e) nicht innerhalb des anderen Bereichs liegen.

In einer Ausführung werden bzw. sind eine der Außengrenzen oder beide Außengrenzen, insbesondere durch ein hierzu, insbesondere hard- und/oder softwaretechnisch, eingerichtetes Mittel des Systems, (jeweils) durch diskrete Raumelemente, insbesondere Voxel und/oder Quader, insbesondere Würfel, beschrieben, insbesondere temporär oder dauerhaft gespeichert. Hierdurch kann in einer Ausführung die Beschreibung der Raumbereiche und/oder Ermittlung von Schnitten und/oder inkludierten Punkten verbessert, insbesondere vereinfacht und/oder beschleunigt werden.

In einer Weiterbildung weisen die diskreten Raumelemente, durch die eine der Außengrenzen beschrieben wird bzw. ist, eine maximale und/oder minimale Abmessung von höchstens 1 m, insbesondere von höchstens 50 cm auf, insbesondere von höchstens 10 cm, insbesondere von höchstens 5 cm. Zusätzlich oder alternativ weisen in einer Weiterbildung die diskreten Raumelemente, durch die eine der Außengrenzen beschrieben wird bzw. ist, eine maximale und/oder minimale Abmessung von wenigstens 0,1 mm, insbesondere von wenigstens 1 mm auf, insbesondere von wenigstens 1 cm. Hierdurch kann in einer Ausführung vorteilhaft jeweils eine ausreichende genaue Diskretisierung und andererseits ein vorteilhaft niedriger, insbesondere numerischer, Aufwand kombiniert werden.

In einer Ausführung werden bzw. sind beide Außengrenzen, insbesondere durch das Mittel, jeweils durch eine Liste mit diskreten Raumelementen, insbesondere Voxeln und/oder Quadern, beschrieben, insbesondere gespeichert, wobei in einer Weiterbildung die diskreten Raumelemente, die eine Außengrenze beschreiben, jeweils untereinander und/oder zu einem oder mehreren, insbesondere wenigstens im Wesentlichen allen Raumelementen gleich sind, die die andere Außengrenze beschreiben, insbesondere nach Form und/oder Größe.

Dann wird, insbesondere durch ein hierzu, insbesondere hard- und/oder softwaretechnisch, eingerichtetes Mittel des Systems, ermittelt, ob wenigstens ein Element der einen Liste und wenigstens ein Element der anderen Liste wenigstens einen gemeinsamen Punkt aufweisen, und festgestellt, dass die beiden Außengrenzen einander schneiden, falls festgestellt wird, dass wenigstens ein Element der einen Liste und wenigstens ein Element der anderen Liste wenigstens einen gemeinsamen Punkt aufweisen. Hierdurch kann in einer Ausführung die Ermittlung von Schnitten verbessert, insbesondere vereinfacht und/oder beschleunigt werden. In einer Ausführung wird die Prüfung bereits abgebrochen und festgestellt, dass die beiden Außengrenzen einander schneiden, sobald ein erster gemeinsamer Punkt ermittelt worden ist.

In einer Weiterbildung werden bzw. sind hierzu, insbesondere durch ein hierzu, insbesondere hard- und/oder softwaretechnisch, eingerichtetes Mittel des Systems, die Raumelemente wenigstens einer der beiden Listen in ein gemeinsames Bezugssystem transformiert. In einer Weiterbildung kann eine entsprechende Transformation eine lineare Abbildung umfassen, insbesondere sein. Hierdurch kann in einer Ausführung die Ermittlung von Schnitten und/oder inkludierten Punkten verbessert, insbesondere vereinfacht und/oder beschleunigt werden.

Zusätzlich oder alternativ werden bzw. sind, insbesondere durch ein hierzu, insbesondere hard- und/oder softwaretechnisch, eingerichtetes Mittel des Systems, die Raumelemente wenigstens einer der beiden Listen sortiert, insbesondere in auf- oder absteigender Entfernung der Raumelemente zueinander und/oder zu einem Bezug, in auf- oder absteigender Reihenfolge von Elementindices oder dergleichen. Hierdurch kann in einer Ausführung die Ermittlung von Schnitten und/oder inkludierten Punkten verbessert, insbesondere vereinfacht und/oder beschleunigt werden.

In einer Weiterbildung wird, insbesondere durch ein hierzu, insbesondere hard- und/oder softwaretechnisch, eingerichtetes Mittel des Systems, ermittelt, ob die beiden Listen wenigstens ein gemeinsames Raumelement aufweisen, und festgestellt, dass die beiden Außengrenzen einander schneiden, falls (festgestellt wird, dass) die beiden Listen wenigstens ein gemeinsames Raumelement aufweisen. Hierdurch kann in einer Ausführung die Ermittlung von Schnitten und/oder inkludierten Punkten verbessert, insbesondere vereinfacht und/oder beschleunigt werden.

Einer oder mehrere der hier erläuterten Schritte werden in einer Ausführung jeweils teilweise oder vollständige automatisiert durch- bzw. ausgeführt.

In einer Weiterbildung wird, insbesondere durch ein hierzu, insbesondere hard- und/oder softwaretechnisch, eingerichtetes Mittel des Systems, eine Penetration des ersten Raumbereichs durch den zweiten Raumbereich mehrfach, insbesondere zyklisch und/oder für bestimmte Stellungen der Maschine geprüft. Zusätzlich oder alternativ wird in einer Weiterbildung, insbesondere durch ein hierzu, insbesondere hard- und/oder softwaretechnisch, eingerichtetes Mittel des Systems, eine Penetration des ersten Raumbereichs durch einen oder mehrere weitere zweite Raumbereiche und/oder eine Penetration eines oder mehrerer weiterer erster Raumbereiche durch den zweiten Raumbereich, in einer Weiterbildung auch durch einen oder mehrere weitere zweite Raumbereiche, ein- oder mehrfach, insbesondere zyklisch und/oder für bestimmte Stellungen der Maschine in der hier beschriebenen Weise geprüft.

Ein Mittel im Sinne der vorliegenden Erfindung kann hard- und/oder softwaretechnisch ausgebildet sein, insbesondere eine, vorzugsweise mit einem Speicher- und/oder Bussystem daten- bzw. signalverbundene, insbesondere digitale, Verarbeitungs-, insbesondere Mikroprozessoreinheit (CPU) und/oder ein oder mehrere Programme oder Programmmodule aufweisen. Die CPU kann dazu ausgebildet sein, Befehle, die als ein in einem Speichersystem abgelegtes Programm implementiert sind, abzuarbeiten, Eingangssignale von einem Datenbus zu erfassen und/oder Ausgangssignale an einen Datenbus abzugeben. Ein Speichersystem kann ein oder mehrere, insbesondere verschiedene, Speichermedien, insbesondere optische, magnetische, Festkörper- und/oder andere nicht-flüchtige Medien aufweisen. Das Programm kann derart beschaffen sein, dass es die hier beschriebenen Verfahren verkörpert bzw. auszuführen imstande ist, sodass die CPU die Schritte solcher Verfahren ausführen kann und damit insbesondere die Maschine betreiben bzw. überwachen kann.

Weitere Vorteile und Merkmale ergeben sich aus den Unteransprüchen und den Ausführungsbeispielen. Hierzu zeigt, teilweise schematisiert:
- Fig. 1:: einen ersten Raumbereich, einen zweiten, diesen penetrierenden und roboterfesten Raumbereich und einen Teil eines weiteren zweiten roboterfesten Raumbereichs in einem Schritt eines durch ein System durchgeführten Verfahrens nach einer Ausführung der vorliegenden Erfindung;
- Fig. 2:: die Raumbereiche in einem weiteren Schritt des Verfahrens; und
- Fig. 3:: den Ablauf des Verfahrens in dem System.

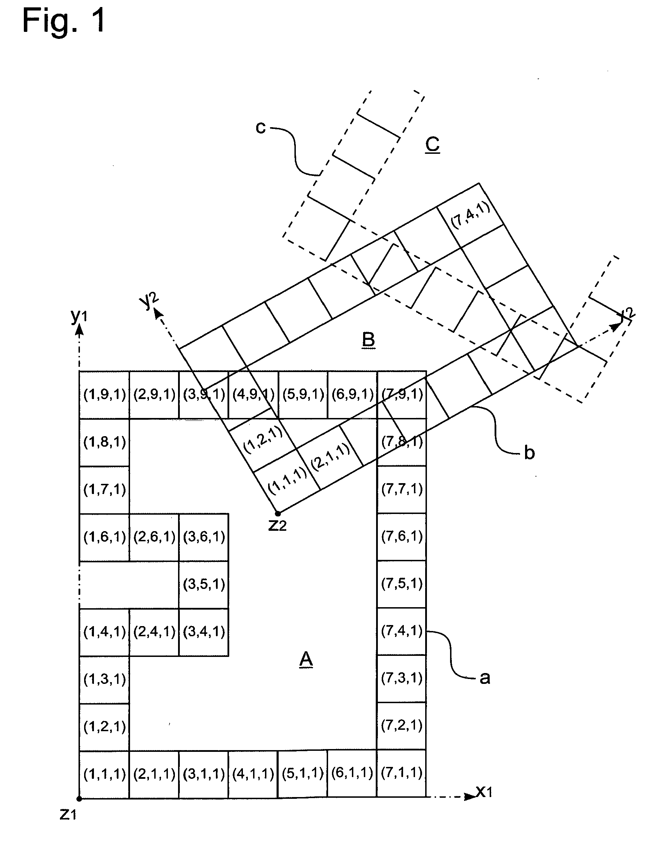

Fig. 1 zeigt in einem Schnitt senkrecht zu einer z-Achse eines umgebungsfesten Bezugssystems (x₁, y₁, z₁) einen ersten Raumbereich A mit einer geschlossenen Außengrenze a, einen zweiten Raumbereich B mit einer geschlossenen Außengrenze b, und gestrichelt einen Teil eines weiteren zweiten Raumbereichs C mit einer geschlossenen Außengrenze c.

Der zweite Raumbereich B ist ortsfest bezüglich eines Werkzeugs eines im Übrigen nicht dargestellten mehrachsigen Roboters definiert und hüllt dieses vollständig ein.

Der weitere zweite Raumbereich C ist ortsfest bezüglich einer Hand des Roboters definiert und hüllt diese vollständig ein.

Der erste Raumbereich A ist ortsfest bezüglich einer Umgebung definiert und umschließt einen für den Roboter verbotenen Schutzbereich. In einer anderen Ausführung kann er stattdessen auch ein Glied eines weiteren, kooperierenden Roboters umschließen.

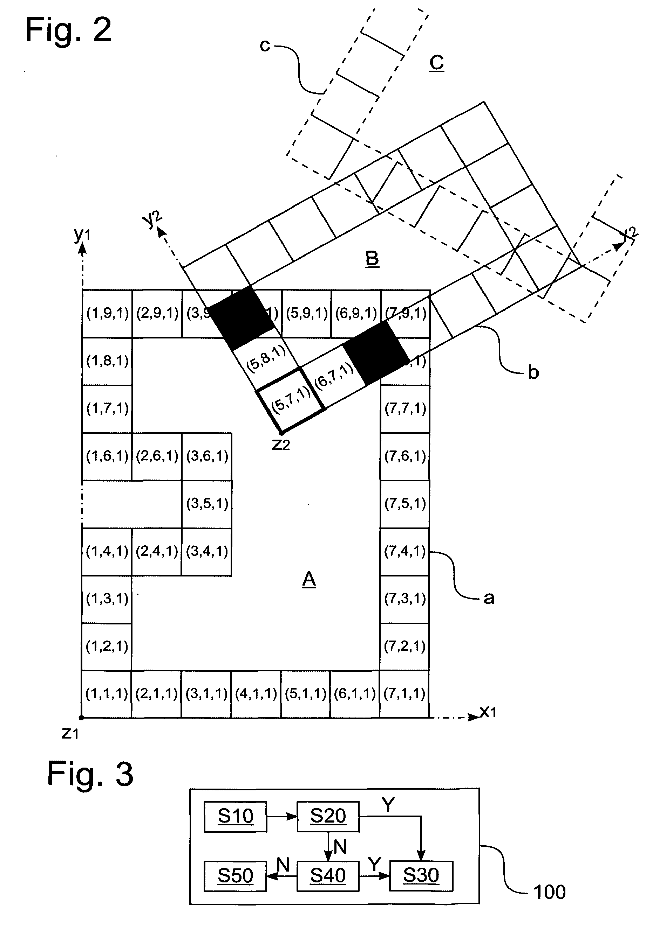

Ein Verfahren nach einer Ausführung der vorliegenden Erfindung, das durch ein System 100 (vgl. Fig. 3) nach einer Ausführung der vorliegenden Erfindung durchgeführt wird, wird nachfolgend mit Bezug auf die Überwachung einer Penetration des durch den ersten Raumbereich A beschriebenen Schutzbereichs durch den das Werkzeug umhüllenden zweiten Raumbereich B näher erläutert. Es kann analog zum Überwachen einer Penetration des Schutzbereichs durch weitere Glieder des Roboters umhüllende Raumbereiche wie beispielsweide den Raumbereiche C und/oder zum Überwachen einer Penetration eines ein Glied eines weiteren Roboters umhüllenden Raumbereiches A durch einen ein Glied des Roboters umhüllenden Raumbereich wie beispielsweise die Raumbereiche B, C verwendet werden.

Die geschlossenen Außengrenzen a, b, c werden bzw. sind jeweils durch eine Liste mit diskreten Würfeln mit einer maximalen Kantenlänge von 10 cm beschrieben.

Die Würfel der Liste {a} des ersten Raumbereichs A bzw. seiner Außengrenze a sind in Fig. 1 exemplarisch in dem umgebungsfesten Bezugssystem (x₁, y₁, z₁) identifiziert. Dabei bezeichnet das Listenelement "(1, 1, 1)" einen Würfel, dessen Mittelpunkt in dem Bezugssystem die (ganzzahlig gerundeten) Koordinaten x₁ = 1, y₁ = 1 und z₁ = 1 aufweist, das Listenelement "(2, 1, 1)" einen Würfel, dessen Mittelpunkt in dem Bezugssystem die Koordinaten x₁ = 2, y₁ = 1 und z₁ = 1 aufweist, das Listenelement "(1, 2, 1)" einen Würfel, dessen Mittelpunkt in dem Bezugssystem die Koordinaten x₁ = 1, y₁ = 2 und z₁ = 1 aufweist und so weiter. Die Listenelemente (1, 1, 1), (2, 1, 1), (3, 1, 1),..., (1, 2, 1),...(7, 9, 1) sind sortiert abgespeichert.

Die Würfel der Liste {b} des zweiten Raumbereichs B bzw. seiner Außengrenze b sind in Fig. 2 exemplarisch in einem roboterwerkzeugfesten Bezugssystem (x₂, y₂, z₂) identifiziert. Dabei bezeichnet das Listenelement "(1, 1, 1)" einen Würfel, dessen Mittelpunkt in dem roboterwerkzeugfesten Bezugssystem die (ganzzahlig gerundeten) Koordinaten x₂ = 1, y₂ = 1 und z₂ = 1 aufweist, das Listenelement "(2, 1, 1)" einen Würfel, dessen Mittelpunkt in dem roboterwerkzeugfesten Bezugssystem die Koordinaten x₂ = 2, y₂ = 1 und z₂ = 1 aufweist, das Listenelement "(1, 2, 1)" einen Würfel, dessen Mittelpunkt in dem roboterwerkzeugfesten Bezugssystem die Koordinaten x₂ = 1, y₂ = 2 und z₂ = 1 aufweist und so weiter.

In einem ersten Schritt S10 (vgl. Fig. 3) werden die Raumelemente der Liste {b} des zweiten Raumbereichs B bzw. seiner Außengrenze b in das gemeinsame, umgebungsfeste Bezugssystem (x₁, y₁, z₁) transformiert. Eine mögliche Transformation in Form einer linearen Abbildung ist in Fig. 2 angedeutet. Sie ergibt sich durch eine Verdrehung des roboterwerkzeugfesten Bezugssystems (x₂, y₂, z₂) in das umgebungsfeste Bezugssystem (x₁, y₁, z₁) und eine Addition des Abstandsvektors [4, 6, 0] der Ursprünge dieser beiden Bezugssysteme. Entsprechend bezeichnet das transformierte Listenelement "(5, 7, 1)" der Liste {b} in dem gemeinsamen, umgebungsfesten Bezugssystem (x₁, y₁, z₁) den Würfel des zweiten Raumbereichs B bzw. seiner Außengrenze b, dessen Mittelpunkt in dem roboterwerkzeugfesten Bezugssystem die Koordinaten x₂ = 1, y₂ = 1 und z₂ = 1 aufweist, das transformierte Listenelement "(6, 7, 1)" der Liste {b} in dem gemeinsamen, umgebungsfesten Bezugssystem den Würfel des zweiten Raumbereichs B bzw. seiner Außengrenze b, dessen Mittelpunkt in dem roboterwerkzeugfesten Bezugssystem die Koordinaten x₂ = 2, y₂ = 1 und z₂ = 1 aufweist, das transformierte Listenelement "(5, 8, 1)" der Liste {b} in dem gemeinsamen, umgebungsfesten Bezugssystem den Würfel des zweiten Raumbereichs B bzw. seiner Außengrenze b, dessen Mittelpunkt in dem roboterwerkzeugfesten Bezugssystem die Koordinaten x₂ = 1, y₂ = 2 und z₂ = 1 aufweist und so weiter.

Die Listenelemente (5, 7, 1), (6, 7, 1), (5, 8, 1),... werden sortiert und abgespeichert.

In einem Schritt S20 ermittelt das System 100, ob die Außengrenze a des ersten Raumbereichs A und die Außengrenze b des zweiten Raumbereichs B einander schneiden oder nicht.

Hierzu ermittelt das System 100 in Schritt S20, ob wenigstens ein Element der Liste {a} und wenigstens ein Element der anderen Liste {b} wenigstens einen gemeinsamen Punkt aufweisen.

Hierzu ermittelt das System 100 in Schritt S20, ob die beiden Listen {a}, {b} wenigstens ein gemeinsames Raumelement aufweisen.

Ermittelt das System 100 in Schritt S20, dass die beiden Listen {a}, {b} wenigstens ein gemeinsames Raumelement und somit auch wenigstens einen gemeinsamen Punkt aufweisen (S20: "Y"), stellt das System 100 in einem Schritt S30 fest, dass die beiden Außengrenzen a, b einander schneiden und daher eine Penetration des ersten Raumbereichs A durch den zweiten Raumbereich B vorliegt.

Im Ausführungsbeispiel ist dies dadurch angedeutet, dass die beiden Listen {a}, {b} die gemeinsamen Elemente (7, 8, 1) und (4, 9, 1) aufweisen, die in der Außengrenze b zur Verdeutlichung schwarz ausgefüllt sind.

Das System 100 bricht die Prüfung in Schritt S20 ab und geht zu Schritt S30, sobald es das erste gemeinsame Element in den sortierten Listen {a}, {b} auffindet.

In einer Abwandlung kann statt gemeinsamer Listenelemente auch geprüft werden, ob wenigstens ein ausgezeichneter Punkt, beispielsweise ein Eck- oder Mittelpunkt, wenigstens eines Würfels der Liste {b} in einem Würfel der Liste {a} liegt.

Hat das System 100 die Überprüfung auf einen Schnitt der Außengrenzen {a}, {b} in Schritt S20 abgeschlossen, ohne einen Schnitt zu ermitteln (S20: "N"), fährt es mit Schritt S40 fort.

In diesem Schritt S40 prüft das System 100, ob einer der beiden Bereiche vollständig in dem anderen der beiden Bereiche liegt oder nicht.

Hierzu ermittelt das System 100 in Schritt S40, ob ein ausgewählter Punkt des zweiten Raumbereichs B innerhalb des ersten Raumbereichs A liegt.

Hierzu ermittelt das System 100 in Schritt S40, ob der zur Verdeutlichung in Fig. 2 dick umrahmte Würfel der Außengrenze b, der im roboterwerkzeugfesten Bezugssystem die Koordinaten (1, 1, 1) und nach Transformation in das gemeinsame, umgebungsfeste Bezugssystem die Koordinaten (5, 7, 1) aufweist, innerhalb des ersten Bereichs A liegt.

In einer Abwandlung kann statt dieses Würfels auch geprüft werden, ob wenigstens ein ausgezeichneter Punkt, beispielsweise ein Eck- oder Mittelpunkt eines Würfels der Liste {b}, innerhalb des ersten Bereichs A liegt.

Die umgekehrte Prüfung kann vorliegend entfallen, da der erste Raumbereich A nach Form und Größe so definiert ist, dass er nicht innerhalb des zweiten Raumbereichs B liegen kann. Andernfalls kann in Schritt S40 analog auch geprüft werden, ob beispielsweise der Würfel der Außengrenze a, der im umgebungsfesten Bezugssystem die Koordinaten (7, 9, 1) aufweist, innerhalb des zweiten Bereichs B liegt.

Stellt das System 100 in Schritt S40 fest, dass der ausgewählte Punkt eines Raumbereichs innerhalb des anderen Bereichs liegt (S40: "Y"), fährt es mit Schritt S30 fort und stellt fest, dass eine Penetration des ersten Raumbereichs A durch den zweiten Raumbereich B vorliegt.

Andernfalls (S40: "N") stellt das System 100 in einem Schritt S50 fest, dass keine Penetration des ersten Raumbereichs A durch den zweiten Raumbereich B vorliegt, da die beiden Außengrenzen a, b einander nicht schneiden (S20: "N") und keiner der beiden Bereiche vollständig in dem anderen der beiden Bereiche liegt (S40: "N").

Das System 100 führt das hier beschriebene Verfahren auf Basis eines Computerprogrammprodukts, insbesondere eines Datenträgers oder -speichers, mit einem Programmcode durch, der auf einem von einem Computer lesbaren Medium gespeichert ist. Entsprechend können die Elemente S10-S50 auch Mittel des Systems 100 symbolisieren.

Wie vorstehend erläutert, können in gleicher Weise auch Penetrationen des Schutzbereichs durch weitere Glieder des Roboters wie beispielsweise seine Hand und/oder Penetrationen weiterer Schutzbereiche durch ein oder mehrere Glieder des Roboters geprüft werden. Das System 100 kann das beschriebene Verfahren zusätzlich oder alternativ auch mehrfach, insbesondere zyklisch und/oder für bestimmte Stellungen des Roboters durchführen.

Obwohl in der vorhergehenden Beschreibung exemplarische Ausführungen erläutert wurden, sei darauf hingewiesen, dass eine Vielzahl von Abwandlungen möglich ist.

So werden in einer Abwandlung in Schritt S10 die transformierten Raumelemente (5, 7, 1), (6, 7, 1), (5, 8, 1),... der Liste {b} nicht sortiert, sondern in Schritt S20 einzeln, insbesondere nacheinander und/oder vor der Transformation des jeweils nächsten Raumelements, in der Liste {a} nachgeschlagen bzw. für die transformierten Raumelemente (5, 7, 1), (6, 7, 1), (5, 8, 1),... der (somit nicht (um)sortierten) Liste {b} jeweils, insbesondere nacheinander und/oder vor der Transformation des jeweils nächsten Raumelements, ermittelt, ob das transformierte Raumelement und wenigstens ein Element der Liste {a} wenigstens einen gemeinsamen Punkt aufweisen, insbesondere die Liste {a} dieses transformierte Raumelement aufweist. Hierdurch kann vorteilhaft Laufzeit und Arbeitsspeicher für die Sortierung der transformierten Liste {b} eingespart werden.

In einer Abwandlung wird die Prüfung in Schritt S20 nicht abgebrochen, sobald das erste gemeinsame Element in den Listen {a}, {b} aufgefunden worden ist, da ein solcher bedingter (Programm)Sprung relativ lange dauern und/oder einen Jitter in der Rechenzeit verursachen kann. Daher werden in der Abwandlung alle Raum- bzw. Listenelemente geprüft und am Ende in Schritt S20 die gemeinsamen Elemente gezählt, wobei das Verfahren mit Schritt S30 fortfährt, falls die Anzahl der gemeinsamen Elemente größer Null oder einem anderen vorgegebenen Grenzwert ist, und andernfalls mit Schritt S40.

Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die

Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen und diesen äquivalenten Merkmalskombinationen ergibt.

### Bezugszeichenliste

- 100: System
- A: erster Raumbereich (umgebungsfest)
- a, b, c: Außengrenze
- B: zweiter Raumbereich (roboterwerkzeugfest)
- C: weiterer Raumbereich (roboterwerkzeugflanschfest)

## Patentansprüche

1. Verfahren zum Betreiben und/oder Überwachen einer Maschine, insbesondere eines mehrachsigen Roboters, mit den Schritten:
Ermitteln (S20), ob eine Außengrenze (a) eines ersten Raumbereichs (A) und eine Außengrenze (b) eines zweiten Raumbereichs (B) einander schneiden; und
Feststellen (S30) einer Penetration des ersten Raumbereichs durch den zweiten Raumbereich, falls die beiden Außengrenzen einander schneiden,
wobei einer (B) der beiden Raumbereiche maschinenfest ist.

2. Verfahren nach Anspruch 1, mit dem Schritt:
Feststellen (S50) keiner Penetration des ersten Raumbereichs durch den zweiten Raumbereich, falls die beiden Außengrenzen einander nicht schneiden und keiner der beiden Bereiche vollständig in dem anderen der beiden Bereiche liegt.

3. Verfahren nach Anspruch 2, mit den Schritten:
Ermitteln (S40), ob ein ausgewählter Punkt des einen Raumbereichs,
insbesondere seiner Außengrenzen, innerhalb des anderen Bereichs liegt; und
Feststellen, dass der eine Raumbereichs nicht vollständig in dem anderen Bereich liegt, falls der ausgewählte Punkt nicht innerhalb des anderen Bereichs liegt.

4. Verfahren nach einem der Ansprüche 2 bis 3, wobei wenigstens einer der beiden Bereiche, insbesondere nach Größe und/oder Form, derart definiert wird, dass er nicht vollständig in dem anderen der beiden Bereiche liegen kann.

5. Verfahren nach einem der vorhergehenden Ansprüche, wobei wenigstens eine der Außengrenzen durch diskrete Raumelemente, insbesondere Voxel und/oder Quader ((1, 1, 1),...,(7, 9, 1)) beschrieben wird.

6. Verfahren nach Anspruch 5, wobei die diskreten Raumelemente eine maximale und/oder minimale Abmessung von wenigstens 0,1 mm und/oder höchstens 1 m aufweisen.

7. Verfahren nach einem der Ansprüche 5 bis 6, wobei beide Außengrenzen jeweils durch eine Liste mit, insbesondere gleichen, diskreten Raumelementen, insbesondere Voxeln und/oder Quadern ((1, 1, 1),...,(7, 9, 1)). beschrieben werden, ermittelt wird (S20), ob wenigstens ein Element der einen Liste und wenigstens ein Element der anderen Liste wenigstens einen gemeinsamen Punkt aufweisen, und festgestellt wird (S20), dass die beiden Außengrenzen einander schneiden, falls festgestellt wird, dass wenigstens ein Element der einen Liste und wenigstens ein Element der anderen Liste wenigstens einen gemeinsamen Punkt aufweisen.

8. Verfahren nach Anspruch 7, wobei die Raumelemente wenigstens einer der beiden Listen in ein gemeinsames Bezugssystem transformiert werden (S10).

9. Verfahren nach einem der Ansprüche 7 bis 8, wobei wenigstens eine der beiden Listen sortiert wird (S10).

10. Verfahren nach einem der Ansprüche 7 bis 9, wobei ermittelt wird (S20), ob die beiden Listen wenigstens ein gemeinsames Raumelement aufweisen, und festgestellt wird, dass die beiden Außengrenzen einander schneiden, falls festgestellt wird, dass die beiden Listen wenigstens ein gemeinsames Raumelement aufweisen.

11. Verfahren nach einem der vorhergehenden Ansprüche, wobei wenigstens eine der Außengrenzen geschlossen ist.

12. Verfahren nach einem der vorhergehenden Ansprüche, wobei der eine (B) der Raumbereiche bezüglich der Maschine und der andere (A) der Raumbereiche bezüglich der Umgebung oder einer anderen Maschine, insbesondere eines anderen mehrachsigen Roboters, definiert wird.

13. System (100) zum Betreiben und/oder Überwachen einer Maschine, insbesondere eines mehrachsigen Roboters, das zur Durchführung eines Verfahrens nach einem der vorhergehenden Ansprüche eingerichtet ist und/oder aufweist:
Mittel (S20) zum Ermitteln, ob eine Außengrenze (a) eines ersten Raumbereichs (A) und eine Außengrenze (b) eines zweiten Raumbereichs (B) einander schneiden; und
Mittel (S30) zu Feststellen einer Penetration des ersten Raumbereichs durch den zweiten Raumbereich, falls die beiden Außengrenzen einander schneiden,
wobei einer der beiden Raumbereiche maschinenfest ist.

14. Computerprogrammprodukt mit einem Programmcode, der auf einem von einem Computer lesbaren Medium gespeichert ist, zur Durchführung eines Verfahrens nach einem der vorhergehenden Ansprüche.
